# EUROPEAN PATENT APPLICATION

(11) **EP 3 720 120 A1**
(43) Date of publication of application: **07.10.2020**
(21) Application number: 20166981.9
(22) Date of filing: 31.03.2020
(51) Int. Cl.: H04N 7/18, H04L 29/06, H04L 29/08

(54) **CAMERA AND COMMUNICATION METHOD**

(30) Priority: 04.04.2019 JP 2019072151
(71) Applicant: Panasonic Intellectual Property Management Co., Ltd., Osaka-shi, Osaka 540-6207 (JP)
(72) Inventor: KIDO, Noriaki, Osaka, 540-6207 (JP); HATAE, Eiichi, Osaka, 540-6207 (JP); YOSHIDA, Yuuji, Osaka, 540-6207 (JP); HARAGUCHI, Masahiko, Osaka, 540-6207 (JP)
(74) Representative: Eisenführ Speiser

(57) **Abstract**

A camera includes an image capturing section; a controller that connects to a server, the server receiving a global IP address of an IPv6-compatible terminal, that receives the global IP address from the server and performs hole punching, and that establishes P2P communication with the IPv6-compatible terminal; and a communicator that transmits image data captured by the image capturing section to the IPv6-compatible terminal by P2P communication.

## Description

### Technical Field

The present disclosure relates to a camera and a communication method.

### Background Art

Hitherto, an image capturing system including a camera and a terminal capable of remotely operating the camera has been disclosed (see, for example, PTL 1). In this image capturing system, the camera is operated by using the terminal to capture an image.

### Citation List

### Patent Literature

PTL 1
Japanese Patent Application Laid-Open No. 2002-354326

### Summary of Invention

### Technical Problem

Internet Protocol version 4 (IPv4) is experiencing an issue of Internet Protocol (IP) address depletion. In addition, communication of image data between a camera and a terminal via a relay server involves an issue of the cost of operating the relay server.

A non-limiting embodiment of the present disclosure provides a camera and a communication method that cope with an issue of IP address depletion in IPv4 and that reduce the cost of operating a relay server.

### Solution to Problem

A camera according to one aspect of the present disclosure includes: an image capturing section; a controller that connects to a server receiving a global Internet Protocol (IP) address of an Internet Protocol version 6 (IPv6)-compatible terminal, that receives the global IP address from the server and performs hole punching, and that establishes peer-to-peer (P2P) communication with the IPv6-compatible terminal; and a communicator that transmits image data captured by the image capturing section to the IPv6-compatible terminal by P2P communication.

A communication method according to one aspect of the present disclosure includes: connecting to a server, the server receiving a global IP address of an IPv6-compatible terminal; receiving the global IP address from the server and performing hole punching; establishing P2P communication with the IPv6-compatible terminal; and transmitting image data captured by an image capturing section to the IPv6-compatible terminal by P2P communication.

These general or specific aspects may be implemented as a system, an apparatus, a method, an integrated circuit, a computer program, a recording medium, or any selective combination thereof.

### Advantageous Effects of Invention

According to one embodiment of the present disclosure, image data communication using P2P communication is performed with an IPv6-compatible terminal, and thus it is possible to cope with an issue of IP address depletion in IPv4 and to reduce the cost of operating a relay server.

Additional benefits and advantages of one embodiment of the present disclosure will become apparent from the specification and drawings. The benefits and/or advantages may be individually obtained by some embodiments and features described in the specification and drawings, which need not all be provided in order to obtain one or more of such features.

### Brief Description of Drawings

FIG. 1 is a diagram illustrating an example of a camera system;
FIG. 2 is a diagram for describing an example of overall operation of a camera system according to one embodiment of the present disclosure;
FIG. 3 is a diagram illustrating an example of a camera system according to one embodiment of the present disclosure;
FIG. 4 is a diagram for describing an example of schemes of connection between a camera and a terminal;
FIG. 5 is a diagram illustrating an example block configuration of the camera;
FIG. 6 is a diagram illustrating an example block configuration of the terminal;
FIG. 7 is a diagram illustrating an example block configuration of a server;
FIG. 8 is a diagram for describing an example of apparatus IDs and IP addresses;
FIG. 9 is a sequence diagram illustrating an example operation of obtaining an apparatus ID and exchanging apparatus IDs;
FIG. 10 is a sequence diagram illustrating an example operation of connecting to a server for control commands;
FIG. 11 is a sequence diagram illustrating an example operation of indoor P2P;
FIG. 12 is a sequence diagram illustrating an example operation of outdoor P2P in IPv4;
FIG. 13 is a sequence diagram illustrating an example operation of outdoor P2P in IPv6; and
FIG. 14 is a sequence diagram illustrating an example operation of relay control in IPv4.

### Description of Embodiments

Hereinafter, embodiments of the present disclosure will be described in detail with reference to the drawings as appropriate. Note that a detailed description more than necessary may be omitted. For example, a detailed description of a matter already well known or a duplicate description of substantially the same configuration may be omitted to prevent the following description from being unnecessarily redundant and to facilitate understanding by those skilled in the art.

The attached drawings and the following description are provided for sufficient understanding of the present disclosure by those skilled in the art, and it is not intended that the subjects described in the claims be limited thereby.

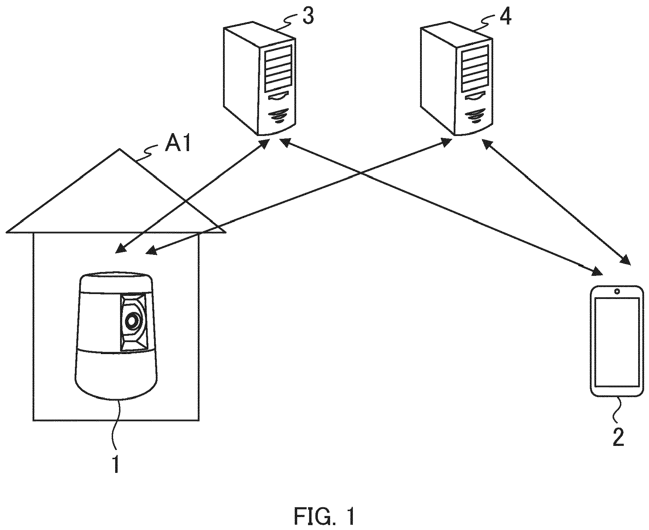

First, underlying knowledge forming the basis of one embodiment of the present disclosure will be described. FIG. 1 is a diagram illustrating an example of a camera system. As illustrated in FIG. 1, the camera system includes camera 1, terminal 2, and servers 3 and 4. FIG. 1 illustrates building A1 in addition to the camera system.

Camera 1 is installed, for example, inside building A1. Camera 1 transmits image data captured thereby to, for example, terminal 2 in real time in response to a request from terminal 2.

Terminal 2 receives image data captured by camera 1 in accordance with a user operation. Terminal 2 displays an image that is based on the received image data on a display. As illustrated in FIG. 1, terminal 2 may receive image data of camera 1 outside building A1. Terminal 2 may also receive image data of camera 1 inside building A1 in which camera 1 is installed. Terminal 2 may be, for example, a mobile terminal such as a smartphone, a tablet terminal, a laptop personal computer (PC), or a mobile phone, or may be a terminal such as a desktop PC.

Server 3 is a server for control commands. Server 3 relays a control command between camera 1 and terminal 2.

Server 4 is a relay server for image data. Server 4 receives image data captured by camera 1 from camera 1 and transmits the image data to terminal 2.

IPv4 is experiencing an issue of IP address depletion. In addition, for example, higher definition of image data leads to a larger amount of communication, resulting in increased cost of operating server 4. P2P communication between camera 1 compatible with IPv6 and terminal 2 compatible with IPv6 would solve the issue of IP address depletion and reduce the cost of operating server 4. However, P2P communication between camera 1 compatible with IPv6 and terminal 2 compatible with IPv6 involves the following issues, for example.
1. Camera 1 and terminal 2 alone are incapable of obtaining each other's global IP addresses that are to be used for P2P communication.
2. In a firewall environment (IPv6), camera 1 and terminal 2 are incapable of performing P2P communication even if they have obtained each other's global IP addresses.

Hereinafter, a camera system according to an embodiment of the present disclosure will be described. In the camera system according to the embodiment of the present disclosure, P2P communication is performed by using the following method.
1. A camera and a terminal obtain each other's global IP addresses of IPv6 via an IPv4- or IPv6-compatible server for control commands.
2. The camera and the terminal perform hole punching on the basis of the global IP addresses of IPv6 obtained via the server, and establish P2P communication in IPv6.

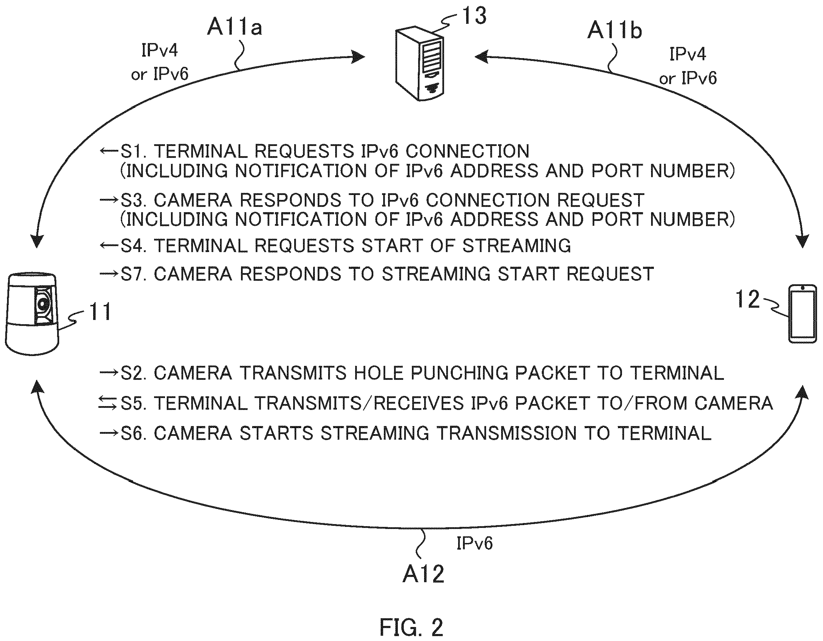

FIG. 2 is a diagram for describing an example of overall operation of a camera system according to one embodiment of the present disclosure. FIG. 2 illustrates camera 11, terminal 12, and server 13.

Server 13 is, for example, a server for control commands. Server 13 is compatible with IPv4. Server 13 controls the connection (establishment) of P2P communication in IPv6 between camera 11 and terminal 12.

Camera 11 communicates with server 13 in IPv4, as indicated by double sided arrow A11a in FIG. 2. Terminal 12 communicates with server 13 in IPv4, as indicated by double sided arrow A11b in FIG. 2. Camera 11 and terminal 12 communicate with each other in IPv6, as indicated by double sided arrow A12 in FIG. 2. In the case of performing communication in IPv6, camera 11 and terminal 12 communicate with each other without via server 13.

Terminal 12 transmits an IPv6 connection request to camera 11 via server 13 (step S1). The IPv6 connection request includes the IPv6 global IP address and port number of terminal 12.

In response to reception of the connection request transmitted in step S1, camera 11 transmits a hole punching packet to the IPv6 global IP address and port number of terminal 12 in IPv6 (without via server 13) (step S2). Accordingly, camera 11 (the firewall of camera 11) becomes capable of receiving an IPv6 packet transmitted by terminal 12.

After transmitting the hole punching packet to terminal 12 in step S2, camera 11 transmits a connection response (connection permission) to the connection request from terminal 12 via server 13 (step S3). The connection response includes the IPv6 global IP address and port number of camera 11.

In response to reception of the connection response transmitted in step S3, terminal 12 requests camera 11 via server 13 to start streaming of image data (step S4).

After requesting the start of streaming in step S4, terminal 12 transmits an IPv6 packet (for example, an authentication request packet) to camera 11 (step S5). Subsequently, terminal 12 receives an IPv6 packet (for example, an authentication response packet to the authentication request packet) from camera 11 (step S5). As a result of transmitting the authentication request packet to camera 11, terminal 12 (the firewall of terminal 12) becomes capable of receiving an IPv6 packet transmitted by camera 11.

Camera 11 starts streaming transmission of IPv6 packets of image data to terminal 12 (step S6).

Camera 11 transmits a response to the streaming start request received in step S4 to terminal 12 via server 13 (step S7). Alternatively, camera 11 may perform step S7 between step S4 and step S5.

In this way, camera 11 and terminal 12 perform P2P communication in IPv6. Accordingly, image data of camera 11 is transmitted to terminal 12 without via a relay server (for example, server 4 illustrated in FIG. 1), and the cost of operating the relay server can be reduced. In addition, camera 11 and terminal 12 are capable of coping with the issue of IP address depletion in IPv4.

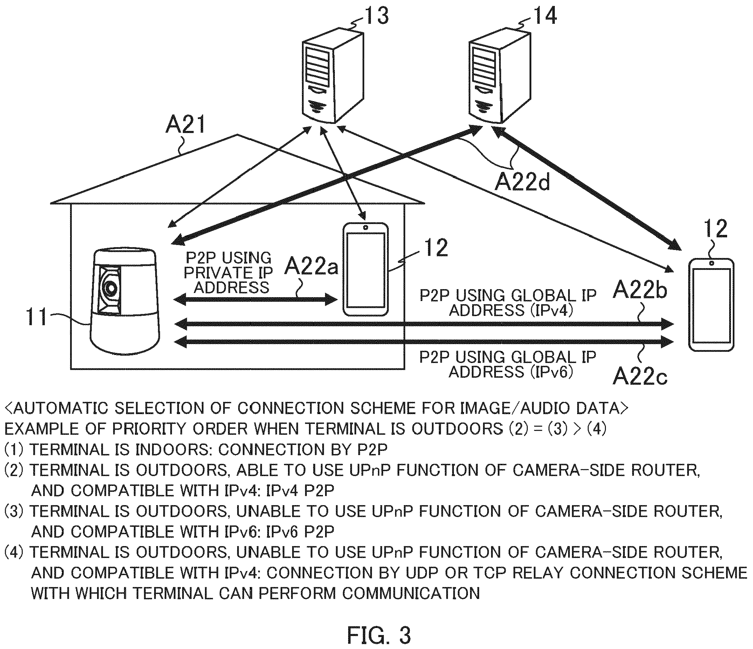

FIG. 3 is a diagram illustrating an example of a camera system according to one embodiment of the present disclosure. In FIG. 3, the same components as those in FIG. 2 are denoted by the same reference numerals.

As illustrated in FIG. 3, the camera system includes camera 11, terminal 12, and servers 13 and 14. FIG. 3 illustrates building A21 in addition to the camera system. FIG. 3 also illustrates four examples of a scheme of connection between camera 11 and terminal 12.

Camera 11 is installed, for example, inside building A21. Camera 11 may be, for example, a monitoring camera that monitors the inside of building A21. Alternatively, camera 11 may be, for example, a pet camera that captures an image depicting a state of a pet inside building A21. Alternatively, camera 11 may be, for example, a meeting camera that captures an image depicting a state of a meeting held inside building A21.

Camera 11 communicates with servers 13 and 14 via a router (not illustrated). Camera 11 transmits image data captured thereby to, for example, terminal 12 in real time in response to a request from terminal 12.

Terminal 12 receives image data captured by camera 11 in accordance with a user operation. Terminal 12 displays an image that is based on the received image data on a display. Terminal 12 may be, for example, a mobile terminal such as a smartphone, a tablet terminal, a laptop PC, or a mobile phone, or may be a terminal such as a desktop PC.

As illustrated in FIG. 3, terminal 12 may receive image data of camera 11 outside building A21, or may receive image data of camera 11 inside building A21 in which camera 11 is installed.

In a case where terminal 12 is located outside building A21, terminal 12 may communicate with camera 11 via, for example, a wireless network such as third generation mobile communication systems (3G), fourth generation mobile communication systems (4G), or fifth generation mobile communication systems (5G), and a public network such as the Internet. In a case where terminal 12 is located inside building A21, terminal 12 may communicate with camera 11 via a router connected to camera 11.

Server 13 is a server for control commands. Server 13 is compatible with IPv4. Server 13 relays a control command between camera 11 and terminal 12. Server 13 is connected to, for example, a public network such as the Internet.

Server 14 is a relay server for image data. Server 14 is compatible with IPv4. Server 14 receives image data captured by camera 11 and transmitted by camera 11, and transmits the image data to terminal 12. Server 14 is connected to, for example, a public network such as the Internet.

Terminal 12 may automatically select a scheme of connection with camera 11. For example, terminal 12 may automatically select a scheme of connection with camera 11 on the basis of whether or not terminal 12 is located within a wireless communication range of the router on the camera 11 side (hereinafter referred to as a "camera-side router") and whether or not a Universal Plug and Play (UPnP) function of the camera-side router is usable.

A UPnP function unusable state may include, for example, a UPnP function OFF state. In addition, the UPnP function unusable state may include, for example, a state in which the UPnP function is unusable for some reason although the UPnP function is ON. The camera-side router is, for example, a router connected to camera 11, and may be regarded as a router whose subordinate network includes camera 11.

Terminal 12 is capable of determining whether or not terminal 12 is located within the wireless communication range of the camera-side router on the basis of reception of a Service Set Identifier (SSID) of the camera-side router. For example, in a case where terminal 12 is receiving the SSID of the router, terminal 12 determines that terminal 12 is located within the wireless communication range of the router. Terminal 12 may determine whether or not terminal 12 is located inside building A21 on the basis of whether or not terminal 12 is located within the wireless communication range of the router.

There are four schemes of connection between camera 11 and terminal 12, as illustrated in FIG. 3. As described above, terminal 12 automatically selects a connection scheme on the basis of whether or not terminal 12 is located within the wireless communication range of the camera-side router and whether or not the UPnP function of the camera-side router is in an ON state.

### <Connection Scheme 1>

In a case where terminal 12 is located inside building A21, terminal 12 performs P2P communication with camera 11 by using a private IP address, as indicated by arrow A22a in FIG. 3.

### <Connection Scheme 2>

In a case where terminal 12 is located outside building A21, able to use the UPnP function of the camera-side router, and compatible with IPv4, terminal 12 performs P2P communication in IPv4 with camera 11, as indicated by arrow A22b in FIG. 3.

### <Connection Scheme 3>

In a case where terminal 12 is located outside building A21, unable to use the UPnP function of the camera-side router, and compatible with IPv6, terminal 12 performs P2P communication in IPv6 with camera 11, as indicated by arrow A22c in FIG. 3.

### <Connection Scheme 4>

In a case where terminal 12 is located outside building A21, unable to use the UPnP function of the camera-side router, and compatible with IPv4, terminal 12 communicates with camera 11 via server 14 (by relay connection), as indicated by arrows A22d in FIG. 3.

In connection scheme 4, terminal 12 performs communication using a User Datagram Protocol (UDP) in a case where terminal 12 is capable of communication using a UDP. In a case where terminal 12 is incapable of communication using a UDP, terminal 12 performs communication using a Transmission Control Protocol (TCP).

Terminal 12 may perform UDP packet communication check to determine whether or not terminal 12 is capable of communication using a UDP. For example, terminal 12 transmits a UDP packet to a server for UDP communication check (not illustrated). In a case where terminal 12 receives a response from the server to which the UDP packet has been transmitted, terminal 12 determines that it is possible to perform communication using a UDP. On the other hand, in a case where terminal 12 does not receive a response from the server to which the UDP packet has been transmitted, terminal 12 determines that it is impossible to perform communication using a UDP.

The camera system illustrated in FIG. 3 automatically selects one of the four connection schemes. Thus, even if communication using any one of the four connection schemes is impossible to perform, the camera system illustrated in FIG. 3 is capable of performing communication using another one of the connection schemes. Thus, the camera system illustrated in FIG. 3 is capable of transmitting image data of camera 11 to terminal 12 in various situations.

Terminal 12 may set a priority order in automatic selection of connection schemes 1 to 4. For example, in a case where terminal 12 is located inside building A21, terminal 12 may give the highest priority to connection scheme 1. In a case where terminal 12 is located outside building A21, terminal 12 may place connection schemes 2 and 3 at the same priority level and may place connection scheme 4 next to connection schemes 2 and 3 in priority order.

In connection scheme 2, terminal 12 may perform P2P communication in IPv6 with camera 11 if terminal 12 is compatible with IPv6, even if the UPnP function of the camera-side router is usable. In other words, in a case where terminal 12 is located outside building A21 and is compatible with IPv6, terminal 12 may perform P2P communication in IPv6 with camera 11 regardless of whether or not the UPnP function of the camera-side router is usable (in a case where terminal 12 is compatible with IPv6, terminal 12 is capable of performing P2P communication in IPv6 with camera 11 regardless of whether or not the UPnP function of the camera-side router is usable). Hereinafter, this connection scheme may be referred to as connection scheme 5.

When terminal 12 connects to camera 11 next time (when terminal 12 receives image data next time), terminal 12 may connect to camera 11 by using the connection scheme used last time. For example, terminal 12 may store a connection scheme used to connect to camera 11 in a storage section and, when connecting to camera 11 next time, terminal 12 may connect to camera 11 in accordance with the connection scheme stored in the storage section. Accordingly, terminal 12 is capable of connecting to camera 11 in shorter time.

Camera 11 transmits image data to terminal 12 in response to a request from terminal 12, but one embodiment of the present disclosure is not limited thereto. Camera 11 may transmit audio data (audio data not including an image) to terminal 12 in response to a request from terminal 12.

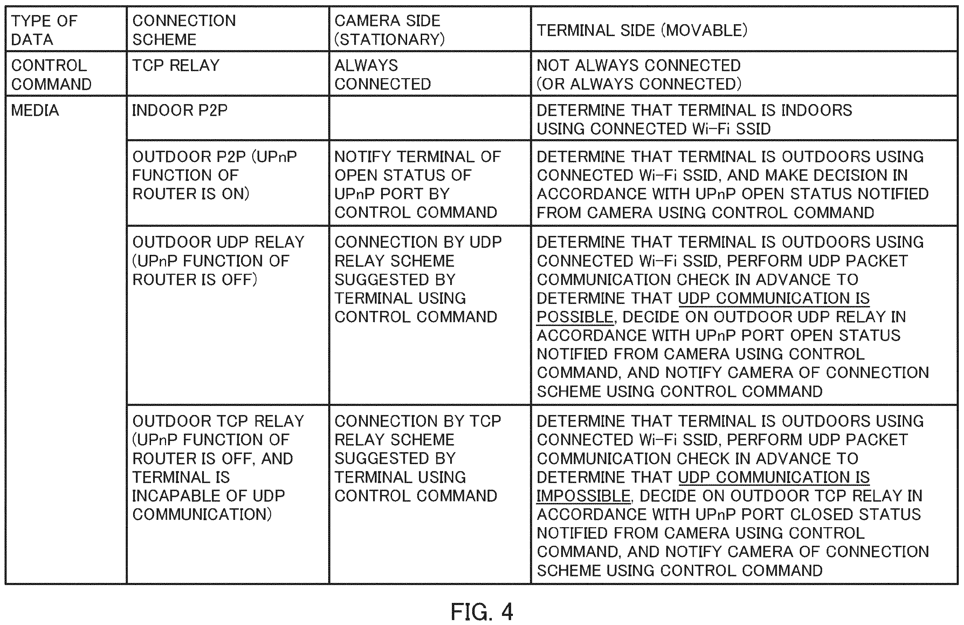

FIG. 4 is a diagram for describing an example of schemes of connection between camera 11 and terminal 12. The types of data communicated between camera 11 and terminal 12 include, for example, a control command and media (image data of camera 11) as illustrated in FIG. 4. A control command is communicated by TCP relay using server 13.

The connection scheme "indoor P2P" of media illustrated in FIG. 4 corresponds to connection scheme 1 described with reference to FIG. 3. The connection scheme "outdoor P2P" of media corresponds to connection scheme 2, connection scheme 3, or connection scheme 5 described with reference to FIG. 3. The connection schemes "outdoor UDP relay" and "outdoor TCP relay" of media correspond to connection scheme 4 described with reference to FIG. 3.

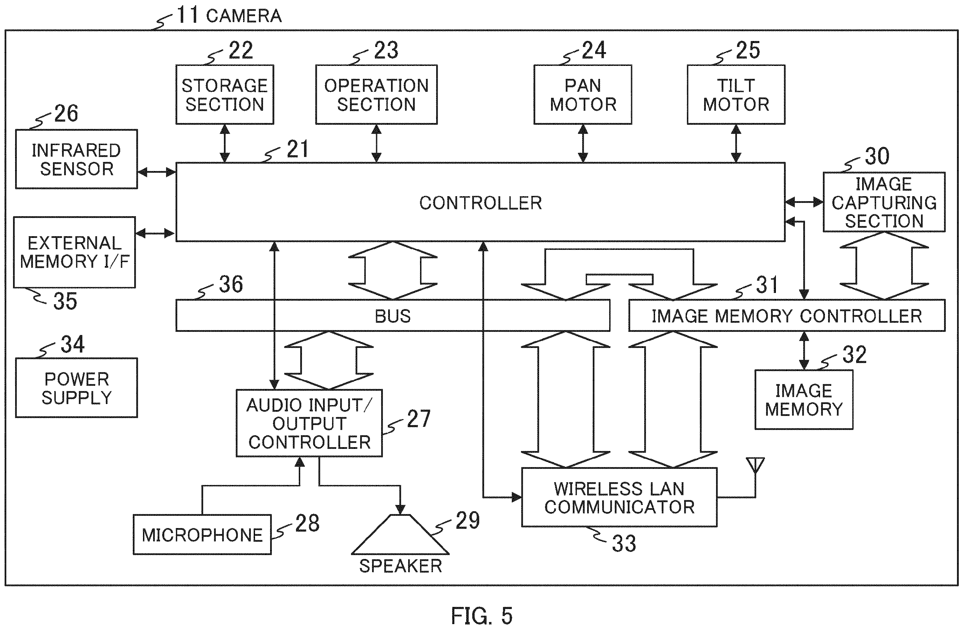

FIG. 5 is a diagram illustrating an example block configuration of camera 11. As illustrated in FIG. 5, camera 11 includes controller 21, storage section 22, operation section 23, pan motor 24, tilt motor 25, infrared sensor 26, audio input/output controller 27, microphone 28, speaker 29, image capturing section 30, image memory controller 31, image memory 32, wireless local area network (LAN) communicator 33, power supply 34, external memory interface (I/F) 35, and bus 36.

Controller 21 controls entire camera 11. Controller 21 may be constituted by a central processing unit (CPU).

Storage section 22 stores a program with which controller 21 operates. Storage section 22 also stores data with which controller 21 performs calculation processing, data with which controller 21 controls the individual sections, or the like. Storage section 22 may be constituted by storage apparatuses such as a random access memory (RAM), a read only memory (ROM), a flash memory, and a hard disk drive (HDD).

Operation section 23 is constituted using a button or the like capable of receiving a user operation. Operation section 23 outputs a signal corresponding to a user operation to controller 21.

Pan motor 24 is a motor that drives image capturing section 30 in a pan direction on the basis of control by controller 21. Tilt motor 25 is a motor that drives image capturing section 30 in a tilt direction on the basis of control by controller 21.

Infrared sensor 26 is, for example, a passive infrared (PIR) sensor. Infrared sensor 26 detects, for example, a person, a pet, or the like.

Audio input/output controller 27, microphone 28, and speaker 29 perform audio input/output with respect to the outside.

Image capturing section 30 includes a lens and an image capturing element. The image capturing element is an image sensor such as, for example, a charge coupled device (CCD) or a complementary metal oxide semiconductor (CMOS) sensor. Image capturing section 30 includes a mechanism that is movable in the pan direction and the tilt direction. Pan motor 24 and tilt motor 25 enable image capturing section 30 to move in the pan direction and the tilt direction. Image capturing section 30 outputs a signal of the image capturing element (image data) to controller 21.

Image memory controller 31 temporarily buffers (stores), in image memory 32, a signal of audio (audio data) collected by microphone 28 together with image data output from image capturing section 30.

Wireless LAN communicator 33 wirelessly connects to the router by using, for example, a wireless communication scheme such as Wi-Fi (registered trademark). Wireless LAN communicator 33 reads out image data (including audio data) stored in image memory 32 via image memory controller 31. Wireless LAN communicator 33 transmits the read out image data to terminal 12 or server 14 via the router.

Power supply 34 supplies necessary power to the individual sections of camera 11. An external memory such as a universal serial bus (USB) memory or an SD card (registered trademark) is attached to or detached from external memory I/F 35. Controller 21 may start image capturing by image capturing section 30 in response to detection of a person, a pet, or the like by infrared sensor 26, and may store image data of image capturing section 30 stored in image memory 32 in the external memory.

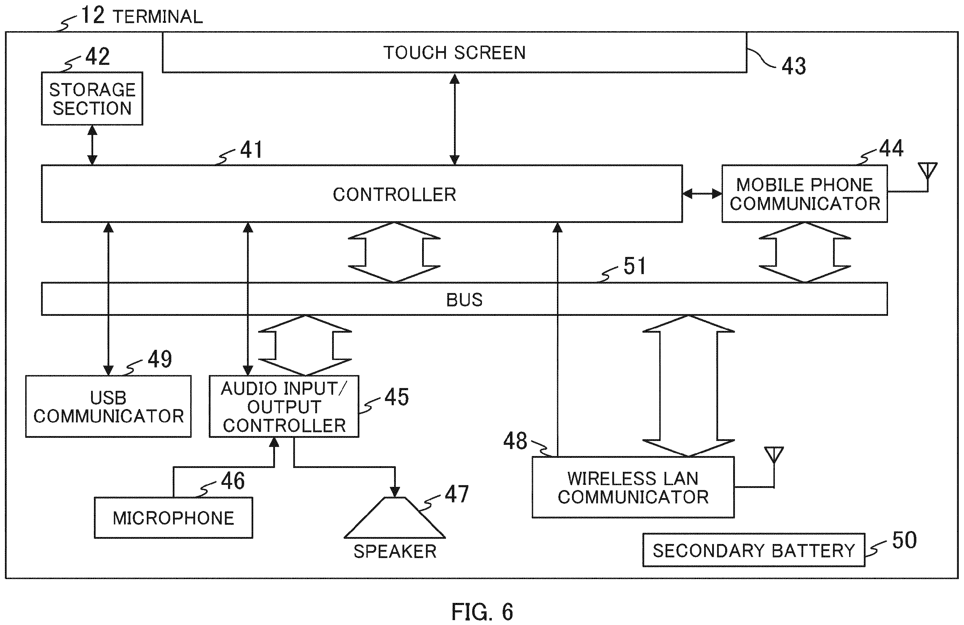

FIG. 6 is a diagram illustrating an example block configuration of terminal 12. As illustrated in FIG. 6, terminal 12 includes controller 41, storage section 42, touch screen 43, mobile phone communicator 44, audio input/output controller 45, microphone 46, speaker 47, wireless LAN communicator 48, USB communicator 49, secondary battery 50, and bus 51.

Controller 41 controls entire terminal 12. Controller 41 may be constituted by a CPU.

Storage section 42 stores a program with which controller 41 operates. Storage section 42 also stores data with which controller 41 performs calculation processing, data with which controller 41 controls the individual sections, or the like. Storage section 42 may be constituted by storage apparatuses such as a RAM, a ROM, a flash memory, and an HDD.

Touch screen 43 is an apparatus including a display apparatus that displays an image and a transparent plate-like input apparatus that is disposed on a screen of the display apparatus and that receives a user operation. Touch screen 43 displays, for example, an image captured by camera 11. In addition, touch screen 43 receives, for example, a tap operation, a drag operation, a press-and-hold operation, or the like by a user, and outputs a signal corresponding to the received operation to controller 41.

Mobile phone communicator 44 wirelessly connects to a network by using, for example, a wireless communication scheme of any one of 3G, 4G, and 5G. Mobile phone communicator 44 transmits data to and receives data from another electronic apparatus via the network.

Audio input/output controller 45, microphone 46, and speaker 47 perform audio input/output with respect to the outside.

Wireless LAN communicator 48 wirelessly connects to a router by using, for example, a wireless communication scheme such as Wi-Fi. Wireless LAN communicator 48 transmits data to and receives data from another electronic apparatus, including camera 11, via the router.

USB communicator 49 transmits data to and receives data from an apparatus, a memory, or the like having an interface of the USB standard.

Secondary battery 50 supplies necessary power to the individual sections of terminal 12. Secondary battery 50 is a rechargeable battery such as a nickel metal hydride battery, a lithium ion battery, or a lead battery.

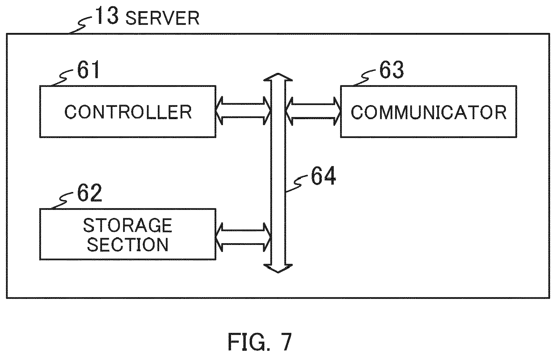

FIG. 7 is a diagram illustrating an example block configuration of server 13. As illustrated in FIG. 7, server 13 includes controller 61, storage section 62, communicator 63, and bus 64.

Controller 61 controls entire server 13. Controller 61 may be constituted by a CPU.

Storage section 62 stores a program with which controller 61 operates. Storage section 62 also stores data with which controller 61 performs calculation processing, data with which controller 61 controls the individual sections, or the like. Storage section 62 may be constituted by storage apparatuses such as a RAM, a ROM, a flash memory, and an HDD.

Communicator 63 transmits data to and receives data from another apparatus via a network. For example, communicator 63 transmits data generated by controller 61 to the network. Communicator 63 outputs data received from the network to controller 61.

Server 14 has blocks similar to the blocks illustrated in FIG. 7. The description thereof is omitted.

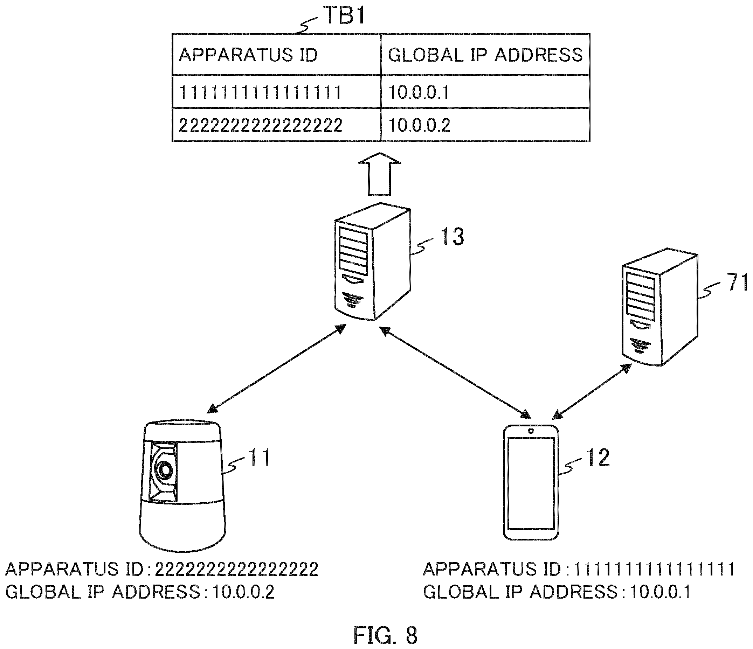

FIG. 8 is a diagram for describing an example of apparatus IDs and IP addresses. In FIG. 8, the same components as those in FIG. 3 are denoted by the same reference numerals.

FIG. 8 illustrates table TB1 stored in storage section 62 of server 13. FIG. 8 also illustrates server 71. Server 71 is a server that assigns an apparatus ID to terminal 12.

An apparatus ID of camera 11 is written in storage section 22 of camera 11, for example, in a factory before shipment.

For example, terminal 12 downloads an application for receiving image data of camera 11 and displaying an image on the display. For example, terminal 12 accesses server 71 and obtains the apparatus ID of terminal 12 in accordance with the downloaded application.

After obtaining the apparatus ID from server 71, terminal 12 exchanges apparatus IDs with camera 11. That is, terminal 12 obtains the apparatus ID of camera 11. Camera 11 obtains the apparatus ID of terminal 12.

Camera 11 transmits the apparatus ID of camera 11 to server 13 when connecting to server 13. Server 13 stores the apparatus ID of camera 11 that has been accessed and the transmission source global IP address of camera 11 in storage section 62 in association with each other. For example, server 13 stores the apparatus ID and global IP address of camera 11 that has been accessed in association with each other, as illustrated in table TB1 in FIG. 8.

Terminal 12 transmits the apparatus ID of terminal 12 to server 13 when connecting to server 13. Server 13 stores the apparatus ID of terminal 12 that has been accessed and the transmission source global IP address of terminal 12 in storage section 62 in association with each other. For example, server 13 stores the apparatus ID and global IP address of terminal 12 that has been accessed in association with each other, as illustrated in table TB1 in FIG. 8.

Camera 11 designates an apparatus ID as a destination of a control command when transmitting the control command to server 13. On the basis of the apparatus ID received from camera 11, server 13 refers to table TB1 and obtains a global IP address corresponding to the apparatus ID. Subsequently, server 13 transmits the control command received from camera 11 to the obtained global IP address.

Terminal 12 designates an apparatus ID as a destination of a control command when transmitting the control command to server 13. On the basis of the apparatus ID received from terminal 12, server 13 refers to table TB1 and obtains a global IP address corresponding to the apparatus ID. Subsequently, server 13 transmits the control command received from terminal 12 to the obtained global IP address.

Similarly to server 13, server 14 stores the apparatus ID and transmission source global IP address of camera 11 that has been accessed in the storage section in association with each other. Also, similarly to server 13, server 14 stores the apparatus ID and transmission source global IP address of terminal 12 that has been accessed in the storage section in association with each other.

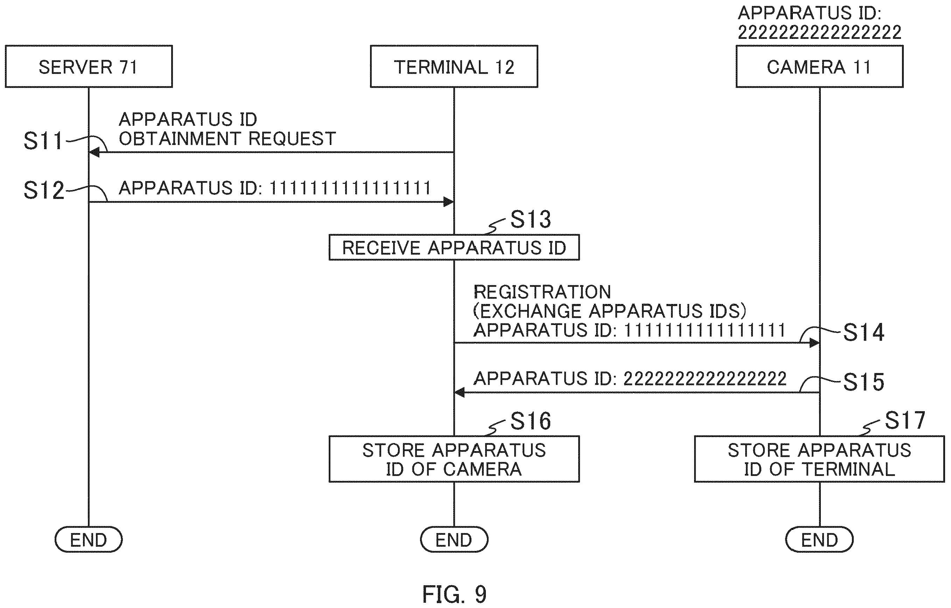

FIG. 9 is a sequence diagram illustrating an example operation of obtaining an apparatus ID and exchanging apparatus IDs. Terminal 12 transmits an apparatus ID obtainment request to server 71 (step S11).

Server 71 receives the apparatus ID obtainment request transmitted in step S11 and issues an apparatus ID. Server 71 transmits the issued apparatus ID to terminal 12 (step S12).

Terminal 12 receives the apparatus ID transmitted in step S12 (step S13). Terminal 12 stores the received apparatus ID in storage section 42.

In response to reception of the apparatus ID in step S13, terminal 12 transmits the received apparatus ID to camera 11 (step S14).

In response to reception of the apparatus ID of terminal 12 transmitted in step S14, camera 11 transmits the apparatus ID of camera 11 to terminal 12 (step S15).

Terminal 12 stores the apparatus ID of camera 11 transmitted in step S15 in storage section 42 (step S16).

Camera 11 stores the apparatus ID of terminal 12 transmitted in step S14 in storage section 22 (step S17).

As a result of the foregoing processing, terminal 12 obtains the apparatus ID thereof. Camera 11 obtains the apparatus ID of terminal 12 as a communication partner. Terminal 12 obtains the apparatus ID of camera 11 as a communication partner.

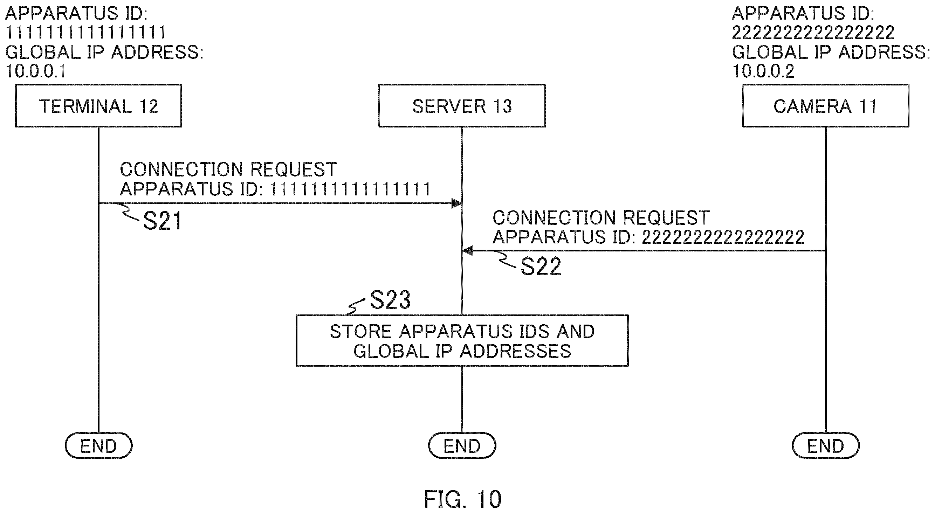

FIG. 10 is a sequence diagram illustrating an example operation of connecting to server 13 for control commands. Terminal 12 transmits a connection request to server 13 (step S21). At this time, terminal 12 transmits the apparatus ID of terminal 12 to server 13.

Camera 11 transmits a connection request to server 13 (step S22). At this time, camera 11 transmits the apparatus ID of camera 11 to server 13.

Server 13 stores the apparatus ID of terminal 12 transmitted in step S21 and the transmission source global IP address of terminal 12 in association with each other (step S23). Also, server 13 stores the apparatus ID of camera 11 transmitted in step S22 and the transmission source global IP address of camera 11 in association with each other (step S23).

As a result of the foregoing processing, the apparatus IDs and the global IP addresses are stored in association with each other in storage section 62 of server 13, for example, as illustrated in table TB1 in FIG. 8.

Alternatively, plural servers 13 for control commands may be provided to distribute a load. Terminal 12 may inquire of a load distribution server which server 13 is a server to be connected (getUrl) and may connect to server 13 having a designated uniform resource locator (URL).

The sequential processing in FIG. 10 may be used by server 13 to authenticate terminal 12 to determine whether terminal 12 is an appropriate terminal for receiving image data of camera 11.

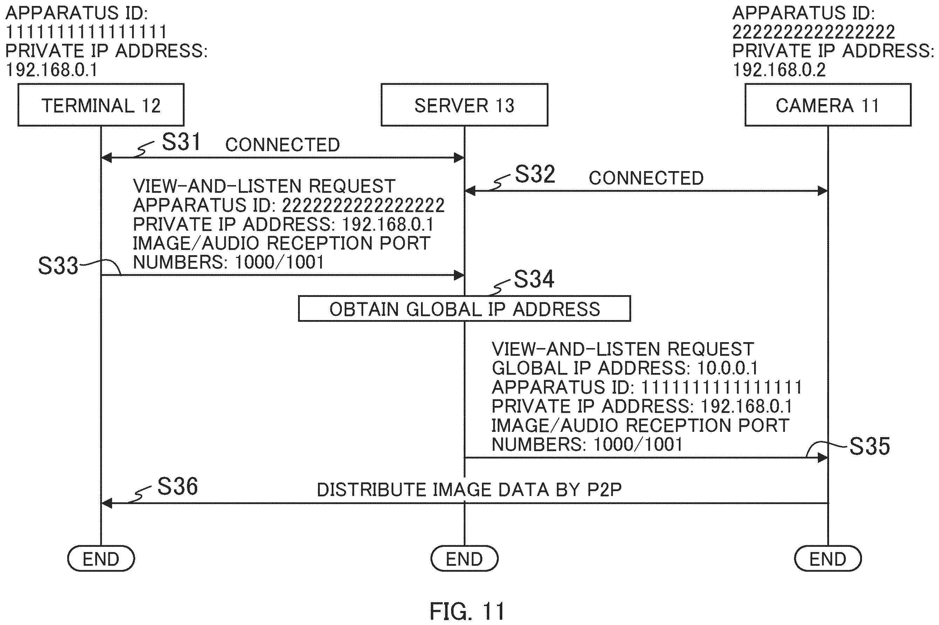

FIG. 11 is a sequence diagram illustrating an example operation of indoor P2P. Terminal 12 has already been connected to server 13 as a result of, for example, the sequence described with reference to FIG. 10 (step S31). Camera 11 has already been connected to server 13 as a result of, for example, the sequence described with reference to FIG. 10 (step S32). As a result of steps S31 and S32, table TB1 in which the apparatus ID and global IP address of camera 11 are associated with each other is stored in server 13, and table TB1 in which the apparatus ID and global IP address of terminal 12 are associated with each other is stored in server 13.

Terminal 12 transmits a view-and-listen request to server 13 (step S33). At this time, terminal 12 transmits the apparatus ID of camera 11, and the private IP address and image/audio reception port numbers of terminal 12, to server 13. Terminal 12 has obtained the apparatus ID of camera 11 as a result of the sequence described with reference to FIG. 9.

On the basis of the apparatus ID of camera 11 transmitted in step S33, server 13 refers to table TB1 and obtains the global IP address of camera 11 (step S34).

Server 13 transmits a view-and-listen request to the global IP address of camera 11 obtained in step S34 (step S35). At this time, server 13 transmits the apparatus ID of terminal 12, and the private IP address and image/audio reception port numbers of terminal 12 transmitted in step S33.

Camera 11 distributes image data to the private IP address and image/audio reception port numbers transmitted in step S35 (step S36).

As a result of the foregoing processing, image data distribution of P2P in a case where terminal 12 is located inside building A21 is performed.

Camera 11 and terminal 12 may perform indoor P2P communication in IPv6.

In step S33, terminal 12 may transmit the apparatus ID of camera 11 and the apparatus ID of terminal 12 to server 13. In step S35, server 13 may transmit the apparatus ID of camera 11 and the apparatus ID of terminal 12 to camera 11.

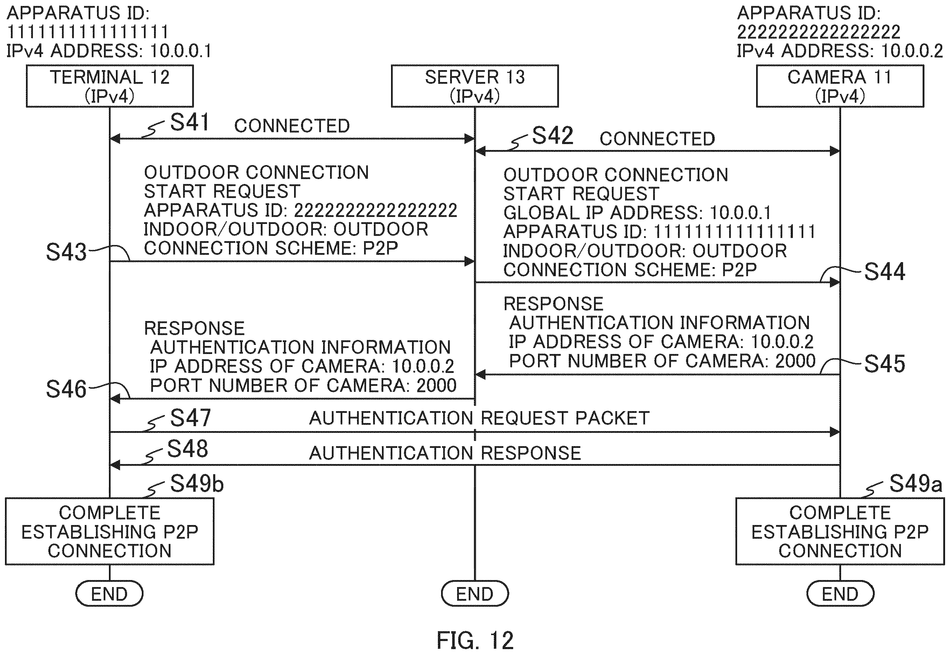

FIG. 12 is a sequence diagram illustrating an example operation of outdoor P2P in IPv4. Terminal 12 has already been connected to server 13 as a result of, for example, the sequence described with reference to FIG. 10 (step S41). Camera 11 has already been connected to server 13 as a result of, for example, the sequence described with reference to FIG. 10 (step S42). As a result of steps S41 and S42, table TB1 in which the apparatus ID and global IP address of camera 11 are associated with each other is stored in server 13, and table TB1 in which the apparatus ID and global IP address of terminal 12 are associated with each other is stored in server 13.

Terminal 12 transmits an outdoor connection start request to server 13 (step S43). At this time, terminal 12 transmits the apparatus ID of camera 11 as a communication destination, information indicating being outdoors (information indicating that terminal 12 is located outside building A21), and information indicating a connection scheme (here, P2P) to server 13. Terminal 12 may be notified in step S41 that the UPnP function of the camera-side router is ON. Accordingly, terminal 12 is capable of transmitting P2P as information indicating a connection scheme to server 13.

On the basis of the apparatus ID of camera 11 transmitted in step S43, server 13 refers to table TB1 and obtains the global IP address of camera 11. Subsequently, server 13 transmits an outdoor connection start request to the obtained global IP address of camera 11 (step S44). At this time, server 13 transmits the apparatus ID of terminal 12, and the information indicating being outdoors and the information indicating the connection scheme (information indicating P2P) transmitted in step S43 to camera 11.

In response to reception of the outdoor connection start request transmitted in step S44, camera 11 transmits a response to server 13 (step S45). At this time, camera 11 transmits authentication information, and the global IP address and port number of camera 11 to server 13.

In response to reception of the response transmitted in step S45, server 13 transmits a response to terminal 12 (step S46). At this time, server 13 transmits the authentication information, and the global IP address and port number of camera 11 transmitted in step S45 to terminal 12.

In response to reception of the response transmitted in step S46, terminal 12 transmits an authentication request packet to camera 11 without via server 13 (step S47). At this time, terminal 12 transmits the authentication information transmitted in step S46 to camera 11.

In response to reception of the authentication request packet transmitted in step S47, camera 11 performs authentication processing and transmits an authentication response to terminal 12 (step S48).

Upon transmitting the authentication response to terminal 12 in step S48, camera 11 completes establishing the P2P connection (step S49a). Upon receiving the authentication response transmitted in step S48, terminal 12 completes establishing the P2P connection (step S49b).

After the foregoing processing, camera 11 and terminal 12 start outdoor P2P communication in IPv4. For example, terminal 12 located outside building A21 receives IPv4 packets of image data from camera 11 by P2P.

In step S43, terminal 12 may transmit the apparatus ID of camera 11 and the apparatus ID of terminal 12 to server 13. In step S44, server 13 may transmit the apparatus ID of camera 11 and the apparatus ID of terminal 12 to camera 11.

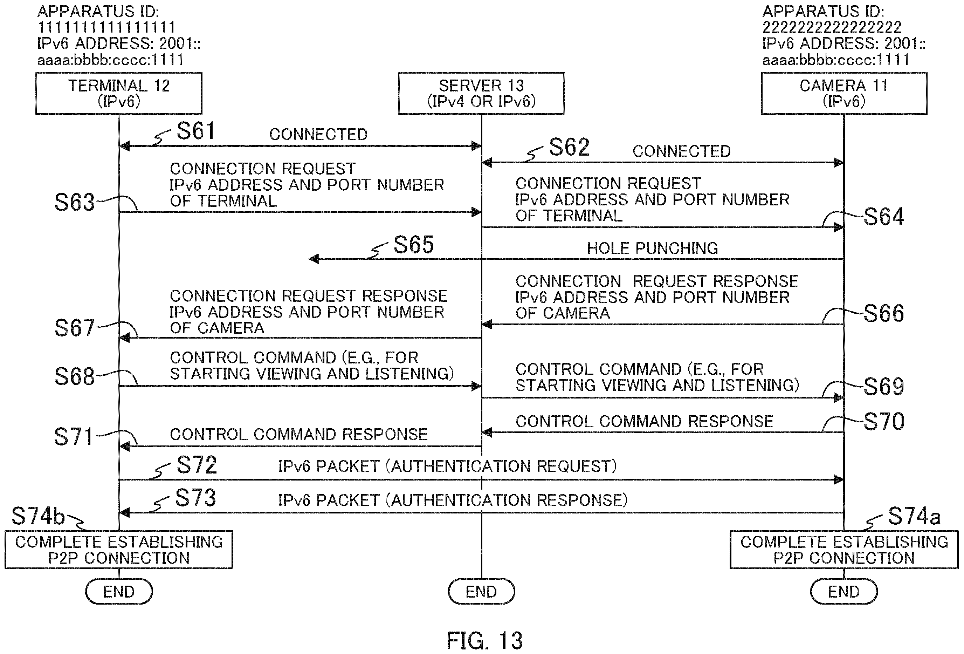

FIG. 13 is a sequence diagram illustrating an example operation of outdoor P2P in IPv6. Terminal 12 has already been connected to server 13 as a result of, for example, the sequence described with reference to FIG. 10 (step S61). Camera 11 has already been connected to server 13 as a result of, for example, the sequence described with reference to FIG. 10 (step S62). As a result of steps S61 and S62, table TB1 in which the apparatus ID and global IP address of camera 11 are associated with each other is stored in server 13, and table TB1 in which the apparatus ID and global IP address of terminal 12 are associated with each other is stored in server 13.

Terminal 12 transmits a connection request to server 13 (step S63). At this time, terminal 12 transmits the IPv6 global IP address and port number of terminal 12 to server 13. Also, terminal 12 transmits the apparatus ID (not illustrated) of camera 11 as a communication destination to server 13. On the basis of the apparatus ID of camera 11, server 13 refers to table TB1 and obtains the global IP address of camera 11.

In response to reception of the connection request transmitted in step S63, server 13 transmits a connection request to the global IP address obtained by referring to table TB1 (to camera 11) (step S64). At this time, server 13 transmits the global IP address and port number of terminal 12 transmitted in step S63 to camera 11.

In response to reception of the connection request transmitted in step S64, camera 11 performs hole punching (step S65). For example, camera 11 transmits a packet to the global IP address and port number of terminal 12 transmitted in step S64. Accordingly, in camera 11 (firewall), blockage of IPv6 packets transmitted by terminal 12 is eliminated. In other words, a hole is punched in the firewall of camera 11 with respect to communication with terminal 12. A packet transmitted to terminal 12 by the hole punching is blocked by the firewall of terminal 12.

After performing hole punching in step S65, camera 11 transmits a connection request response to server 13 (step S66). At this time, camera 11 transmits the IPv6 global IP address and port number of camera 11 to server 13.

In response to reception of the connection request response transmitted in step S66, server 13 transmits a connection request response to terminal 12 (step S67). At this time, server 13 transmits the IPv6 global IP address and port number of camera 11 transmitted in step S66 to terminal 12.

In response to reception of the connection request response transmitted in step S67, terminal 12 transmits a control command to server 13 (step S68). For example, terminal 12 transmits a control command for starting viewing and listening to server 13.

In response to reception of the control command transmitted in step S68, server 13 transmits a control command to camera 11 (step S69).

In response to reception of the control command transmitted in step S69, camera 11 transmits a control command response to server 13 (step S70).

In response to reception of the control command response transmitted in step S70, server 13 transmits a control command response to terminal 12 (step S71).

In response to reception of the control command response transmitted in step S71, terminal 12 transmits an IPv6 packet to the IPv6 global IP address and port number of camera 11 transmitted in step S67 (to camera 11) (step S72). For example, terminal 12 transmits an IPv6 packet of an authentication request to camera 11. As a result of the packet transmission in step S72, in terminal 12 (firewall), blockage of IPv6 packets transmitted by camera 11 is eliminated. In other words, a hole is punched in the firewall of terminal 12 with respect to communication with camera 11.

In response to reception of the IPv6 packet transmitted in step S72, camera 11 transmits an IPv6 packet to terminal 12 (step S73). For example, camera 11 transmits an IPv6 packet of an authentication response to terminal 12.

Upon transmitting the IPv6 packet of the authentication response to terminal 12 in step S73, camera 11 completes establishing the P2P connection (step S74a). Upon receiving the IPv6 packet of the authentication response transmitted in step S73, terminal 12 completes establishing the P2P connection (step S74b).

After the foregoing processing, camera 11 and terminal 12 start outdoor P2P communication in IPv6. For example, terminal 12 located outside building A21 receives IPv6 packets of image data from camera 11 by P2P.

In step S63, terminal 12 may transmit the apparatus ID of camera 11 and the apparatus ID of terminal 12 to server 13. In step S64, server 13 may transmit the apparatus ID of camera 11 and the apparatus ID of terminal 12 to camera 11.

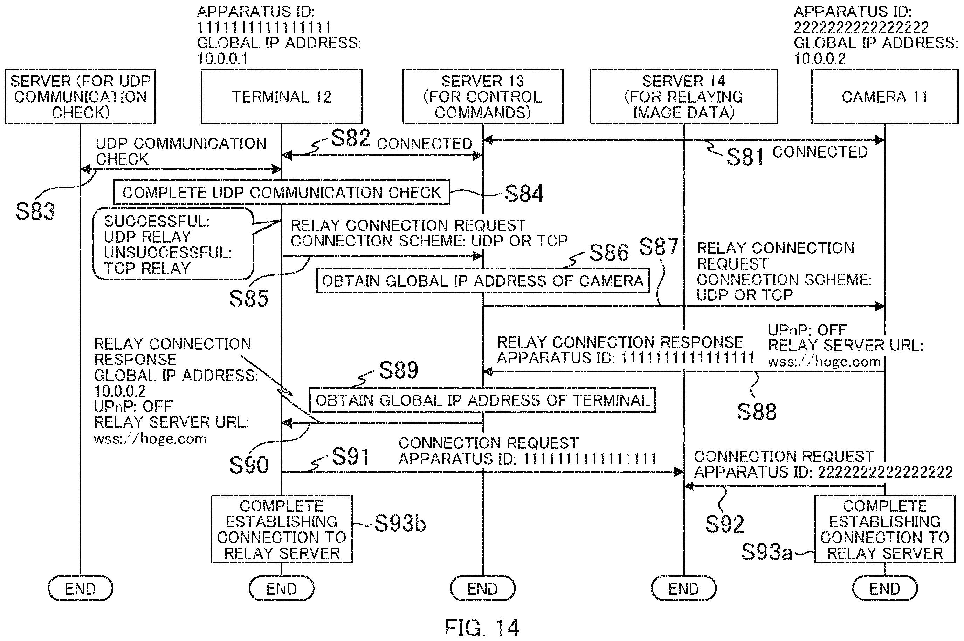

FIG. 14 is a sequence diagram illustrating an example operation of relay control in IPv4. Camera 11 has already been connected to server 13 as a result of, for example, the sequence described with reference to FIG. 10 (step S81). Terminal 12 has already been connected to server 13 as a result of, for example, the sequence described with reference to FIG. 10 (step S82). As a result of steps S81 and S82, table TB1 in which the apparatus ID and global IP address of camera 11 are associated with each other is stored in server 13, and table TB1 in which the apparatus ID and global IP address of terminal 12 are associated with each other is stored in server 13.

Terminal 12 performs UDP communication check with respect to a server for UDP communication check (step S83).

Terminal 12 completes UDP communication check (step S84). In accordance with whether or not the UDP communication check is successful, terminal 12 determines whether to use UDP relay or TCP relay as a connection scheme. For example, in a case where the UDP communication check is successful, terminal 12 determines to use UDP relay as a connection scheme. In a case where the UDP communication check is unsuccessful, terminal 12 determines to use TCP relay as a connection scheme.

Terminal 12 transmits a relay connection request to server 13 (step S85). At this time, terminal 12 transmits the connection scheme determined in step S84 (UDP relay or TCP relay) and the apparatus ID of camera 11 (not illustrated).

In response to reception of the relay connection request transmitted in step S85, server 13 refers to table TB1 and obtains the global IP address of camera 11 on the basis of the apparatus ID of camera 11 transmitted in step S85 (step S86).

Server 13 transmits a relay connection request to the global IP address obtained in step S86 (to camera 11) (step S87). At this time, server 13 transmits the connection scheme transmitted in step S85 to camera 11.

In response to reception of the relay connection request transmitted in step S87, camera 11 transmits a relay connection response to server 13 (step S88). At this time, camera 11 transmits the apparatus ID of terminal 12, the state of the UPnP function of the router (in this case, OFF), and the URL of server 14 that relays image data to server 13.

In response to reception of the relay connection response transmitted in step S88, server 13 refers to table TB1 and obtains the global IP address of terminal 12 on the basis of the apparatus ID of terminal 12 transmitted in step S88 (step S89).

After obtaining the global IP address of terminal 12 in step S89, server 13 transmits a relay connection response to the obtained global IP address (to terminal 12) (step S90). At this time, server 13 transmits the global IP address of camera 11, and the state of the UPnP function and the URL of server 14 transmitted in step S88, to terminal 12.

In response to reception of the relay connection response transmitted in step S90, terminal 12 transmits a connection request to server 14 having the URL transmitted in step S90 (step S91). At this time, terminal 12 transmits the apparatus ID of terminal 12 to server 14.

After transmitting the relay connection response to server 13 in step S88, camera 11 transmits a connection request to server 14 having the URL transmitted in the relay connection response in step S88 (step S92). At this time, camera 11 transmits the apparatus ID of camera 11 to server 14.

Upon transmitting the connection request to server 14 in step S92, camera 11 completes establishing the connection to server 14 (step S93a). Upon transmitting the connection request to server 14 in step S91, terminal 12 completes establishing the connection to server 14 (step S93b).

After the foregoing processing, camera 11 and terminal 12 start communication via server 14. For example, terminal 12 receives IPv4 packets of image data from camera 11 via server 14.

In step S85, terminal 12 may transmit the apparatus ID of camera 11 and the apparatus ID of terminal 12 to server 13. In step S87, server 13 may transmit the apparatus ID of camera 11 and the apparatus ID of terminal 12 to camera 11.

In step S88, camera 11 may transmit the apparatus ID of camera 11 and the apparatus ID of terminal 12 to server 13. In step S90, server 13 may transmit the apparatus ID of camera 11 and the apparatus ID of terminal 12 to terminal 12.

In step S91, terminal 12 may transmit the apparatus ID of camera 11 and the apparatus ID of terminal 12 to server 14. In step S92, camera 11 may transmit the apparatus ID of camera 11 and the apparatus ID of terminal 12 to server 14.

As described above, controller 21 of camera 11 connects to server 13 that receives the global IP address of terminal 12 compatible with IPv6, receives the global IP address of terminal 12 from server 13, performs hole punching, and establishes P2P communication with terminal 12. Wireless LAN communicator 33 of camera 11 transmits image data captured by image capturing section 30 to terminal 12 by P2P communication. Accordingly, image data of camera 11 is transmitted to terminal 12 without via a relay server, and thus the cost of operating the relay server can be reduced. In addition, camera 11 and terminal 12 are capable of coping with the issue of IP address depletion in IPv4.

In a case where terminal 12 compatible with IPv4 is located within the wireless communication range of the router connected to camera 11, controller 21 of camera 11 establishes P2P communication with terminal 12 compatible with IPv4 by using the private IP address of terminal 12 compatible with IPv4. Accordingly, image data of camera 11 is transmitted to terminal 12 without via the relay server, and the cost of operating the relay server can be reduced.

In a case where terminal 12 compatible with IPv4 is located outside the wireless communication range of the router connected to camera 11 and the UPnP function of the router is unusable, controller 21 of camera 11 establishes communication with terminal 12 compatible with IPv4 via server 14. Accordingly, camera 11 is capable of distributing image data also to terminal 12 incompatible with IPv6.

In a case where terminal 12 compatible with IPv4 is capable of UDP communication, controller 21 of camera 11 transmits image data to terminal 12 compatible with IPv4 on the basis of a UDP. In a case where terminal 12 compatible with IPv4 is incapable of UDP communication, controller 21 of camera 11 transmits image data to terminal 12 compatible with IPv4 on the basis of a TCP. Accordingly, camera 11 is capable of distributing image data also to terminal 12 that is incapable of UDP communication compatible with IPv4.

In a case where terminal 12 compatible with IPv4 is located outside the wireless communication range of the router connected to camera 11 and the UPnP function of the router is usable, controller 21 of camera 11 establishes P2P communication with terminal 12 compatible with IPv4. Accordingly, camera 11 is capable of distributing image data also to terminal 12 incompatible with IPv6.

In the description given above, server 13 is compatible with IPv4, but server 13 may be compatible with IPv6. Also, server 14 is compatible with IPv4, but server 14 may be compatible with IPv6.

In the above-described embodiments, the term "section" used for the name of a component may be replaced with another term, such as "circuitry", "device", "unit", or "module".

Embodiments have been described above with reference to the drawings. The present disclosure is not limited to the given examples. It is apparent that those skilled in the art could conceive of various changes or modifications within the scope described in the claims. Such changes or modifications also belong to the technical scope of the present disclosure. The components according to the embodiments may be selectively combined without deviating from the gist of the present disclosure.

The present disclosure can be implemented by software, hardware, or software in cooperation with hardware. The whole or part of each functional block described in the above embodiments may be implemented as an LSI circuit as an integrated circuit, and the whole or part of each process described in the above embodiments may be controlled by a single LSI circuit or a combination of LSI circuits. An LSI circuit may be formed of individual chips or may be formed of a single chip so as to include some or all of the functional blocks. An LSI circuit may be provided with input and output of data. LSI may be referred to as IC, system LSI, super LSI, or ultra LSI, depending on the degree of integration.

The method for circuit integration is not limited to LSI, and circuit integration may be performed by using a dedicated circuit, a general-purpose processor, or a dedicated processor. A field-programmable gate array (FPGA) capable of being programmed after LSI manufacturing, or a reconfigurable processor in which the connections and settings of a circuit cell in LSI are reconfigurable, may be used. The present disclosure may be implemented as digital processing or analog processing.

Furthermore, if the progress of semiconductor technologies or other derived technologies produce a circuit integration technology that replaces LSI, integration of functional blocks may of course be performed by using the technology. Application of biotechnologies or the like may be possible.

### Industrial Applicability

The present disclosure is useful for a camera system that transmits image data captured by a camera to a terminal such as a smartphone.

### Reference Signs List

11 Camera
12 Terminal
13, 14, 71 Server
21, 41, 61 Controller
22, 42, 62 Storage section
23 Operation section
24 Pan motor
25 Tilt motor
26 Infrared sensor
27, 45 Audio input/output controller
28, 46 Microphone
29, 47 Speaker
30 Image capturing section
31 Image memory controller
32 Image memory
33, 48 Wireless LAN communicator
34 Power supply
35 External memory I/F
36, 51, 64 Bus
43 Touch screen
44 Mobile phone communicator
49 USB communicator
50 Secondary battery
63 Communicator

## Claims

1. A camera (11), comprising:
an image capturing section (30);
a controller (21) that connects to a server (13) receiving a global Internet Protocol (IP) address of an Internet Protocol version 6 (IPv6)-compatible terminal (12), that receives the global IP address from the server (13) and performs hole punching, and that establishes peer-to-peer (P2P) communication with the IPv6-compatible terminal (12); and
a communicator (33) that transmits image data captured by the image capturing section (30) to the IPv6-compatible terminal (12) by P2P communication.

2. The camera (11) according to claim 1, wherein, in a case where an IPv4-compatible terminal (12) is located within a wireless communication range of a router to which the camera (11) is connected, the controller (21) establishes P2P communication with the IPv4-compatible terminal (12) by using a private IP address of the IPv4-compatible terminal (12).

3. The camera (11) according to claim 2, wherein, in a case where the IPv4-compatible terminal (12) is located outside the wireless communication range of the router to which the camera (11) is connected and a Universal Plug and Play (UPnP) function of the router is unusable, the controller (21) establishes communication with the IPv4-compatible terminal (12) via a relay server (14).

4. The camera (11) according to claim 3, wherein
in a case where the IPv4-compatible terminal (12) is capable of User Datagram Protocol (UDP) communication, the controller (21) transmits the image data to the IPv4-compatible terminal (12) based on UDP, and
in a case where the IPv4-compatible terminal (12) is incapable of UDP communication, the controller (21) transmits the image data to the IPv4-compatible terminal (12) based on a Transmission Control Protocol (TCP).

5. The camera (11) according to any one of claims 2 to 4, wherein, in a case where the IPv4-compatible terminal (12) is located outside the wireless communication range of the router to which the camera (11) is connected and a UPnP function of the router is usable, the controller (21) establishes P2P communication with the IPv4-compatible terminal (12).

6. A communication method, comprising:
connecting to a server (13), the server (13) receiving a global IP address of an IPv6-compatible terminal (12);
receiving the global IP address from the server (13) and performing hole punching;
establishing P2P communication with the IPv6-compatible terminal (12); and
transmitting image data captured by an image capturing section to the IPv6-compatible terminal (12) by P2P communication.
